# EUROPÄISCHE PATENTSCHRIFT

(11) **EP 1 407 369 B1**
(45) Veröffentlichungstag und Bekanntmachung des Hinweises auf die Patenterteilung: **27.09.2006**
(21) Anmeldenummer: 02758082.8
(22) Anmeldetag: 07.07.2002
(51) Int. Cl.: G06F 13/12, H04L 29/08, H04Q 7/22, H04L 12/28

(54) **VERFAHREN ZUM AUSDRUCK VON INHALTEN AUS DEM INTERNET ODER EINEM INTRANET**
METHOD FOR PRINTING CONTENT FROM THE INTERNET OR AN INTRANET
PROCEDE D'IMPRESSION DE CONTENUS D'INTERNET OU D'UN INTRANET

(30) Priorität: 16.07.2001 DE 10133781
(43) Veröffentlichungstag der Anmeldung: 14.04.2004
(73) Patentinhaber: ThinPrint GmbH, 10559 Berlin (DE)
(72) Erfinder: MICKELEIT, Carsten, 12205 Berlin (DE)
(74) Vertreter: Schneider, Henry
(86) Internationale Anmeldenummer: PCT/DE2002/002491
(87) Internationale Veröffentlichungsnummer: WO 2003/009523

(56) Entgegenhaltungen:
- EP-A- 0 954 147

## Beschreibung

Die Erfindung betrifft ein Verfahren zum mittel- oder unmittelbaren Ausdruck von Inhalten aus dem Internet, Intranet oder einem sonstigen Speichermedium durch ein mobiles Endgerät.

Der Zugriff auf das Internet erfolgte in der Vergangenheit vornehmlich über stationäre Endgeräte, d.h. Personal Computer u. dgl., so daß der Darstellung von Inhalten, z.B. Dokumente, Bilddateien etc., die aus dem Internet heruntergeladen wurden keine Grenzen gesetzt waren, da diese Endgeräte über ausreichend große Bildschirme, komplexe Betriebsysteme, die die Ausführung einer Vielzahl von Anwendungen erlauben, und hohe Speicherkapazitäten, die das Vorhalten von vielen Anwendungen und das Verarbeiten von beliebig großen Dateien erlauben, verfügen.

Mittlerweile erfolgt im Rahmen der technischen Weiterentwicklung der Zugriff auf das Internet zunehmend über mobile Endgeräte wie beispielsweise Mobiltelefone, Handheld Computer, Laptops und Pocket PCs. Diese mobilen Endgeräte weisen - im Gegensatz zu den stationären Geräten - sehr kleine Bildschirme, Minimalbetriebssysteme (WindowsCE, Palm, EPOC/Symbian etc.), auf Minimalbetriebsysteme abgestimmte Minimalversionen von Anwendungen, geringe Arbeitsspeicher, die nur die Verarbeitung von kleinen Dateien erlauben, und geringe Speicherkapzitäten, die nur die Bereitstellung einer Auswahl von Anwendungen ermöglichen, auf.

Somit lassen sich nicht alle Inhalte sinnvoll darstellen bzw. überhaupt nicht darstellen. Daher wurde neben dem Internetstandard HTML der WAP-Standard mit dessen WML-Sprache entwickelt. Aufgrund des WAP-Standards ist in begrenzter Form ein Zugriff auf das Internet mittels mobiler Geräte möglich. HTML und WML können aber nur Dokumente die in diesen Sprachen erstellt wurden an das mobile Endgerät kommunizieren.

Zur Lösung dieses Problems wird versucht, entsprechende Dateien in Minimalformate zu konvertieren, um diese dann auf dem mobilen Endgerät zur Anzeige zu bringen. Diese Konvertierung erfolgt jedoch manuell und offline, so daß der Nutzen äußerst begrenzt ist.

Jedoch auch stationäre Endgeräte sind nicht immer in der Lage entsprechende Inhalte in geeigneter Weise darzustellen, wenn bei diesen nicht die notwendige Anwendung installiert ist, um die Daten zu interpretieren, nicht genügend Arbeitsspeicher vorhanden ist, um die Daten zu laden oder ein Betriebssystem vorhanden ist, auf dem sich die Anwendung nicht ausführen lässt, wie z. B. eine Windows Anwendung auf Unix.

Die Technologie der mobilen Kommunikation hat sich mit dem Standard GSM durchgesetzt und wird mit den Standards GPRS und HSCSD sowie zukünftig UMTS fortentwickelt. So werden ständig die Übertragungsmöglichkeiten optimiert, d. h. die übertragbare Datenmenge steigt drastisch, jedoch die Möglichkeiten zur Ausgabe der Inhalte bleiben limitiert.

In entsprechender Weise ist die Darstellung von Inhalten aus dem Internet, dem Intranet oder auch sonstiger Speichermedien, auf die von derartigen Endgeräten zugegriffen werden kann begrenzt.

Von der Patentanmeldung EP-A-0 954 147, die am 3. November 1999 veröffentlicht wurde, ist schon ein Verfahren bekannt, bei dem beliebige Inhalte aus dem Internet oder auch aus sonstigen Speichermedien auf Endgeräten ausgegeben werden. Dieses Endgerät, ein WAP-Mobiltelefon, um einen dieser Inhalte auszudrucken, übermittelt eine Anfrage zu einem sogenannten Linkserver, der einen individuell gestalteten Druckauftrag dieses Inhalts von einem Server lädt. Der Linkserver übermittelt den Druckauftrag zu einem Gerät, das konfiguriert ist, den Inhalt auszudrucken, und übermittelt zu dem WAP-Mobiltelefon eine Ausdruckbestätigung. In einem Ausführungsbeispiel dieses Verfahrens übermittelt der Linkserver auch Ausdruckdienstanforderungsdaten zu dem WAP-Mobiltelefon, damit der Benutzer diese Daten einsehen kann. In diesem Verfahren wird der Druckauftrag jedoch nicht über eine Schnittstelle des WAP-Mobiltelefons an einen lokalen Drucker zur Ausgabe übermittelt.

Es ist daher Aufgabe der Erfindung, ein Verfahren zum Ausdruck von Inhalten aus dem Internet, dem Intranet oder sonstigen Speichermedien durch ein mobiles Endgerät anzugeben, in dem durch das mobile Endgerät, das diese Inhalte ausdrucken will, der Druckauftrag über eine Schnittstelle an einen Drucker zur Ausgabe übermittelt wird.

Diese Aufgabe wird durch ein Verfahren mit den Merkmalen des Anspruchs 1 gelöst.

Dazu ist erfindungsgemäß ein Verfahren zum mittel- oder unmittelbaren Ausdruck von Inhalten aus dem Internet, Intranet, oder einem sonstigen Speichermedium durch ein mobiles Endgerät vorgesehen, bei dem die Adresse des auszudruckenden Inhaltes von dem mobilen Endgerät an ein zweites Endgerät übermittelt wird, das diesen Inhalt unter Aufruf der dazugehörigen Anwendung lädt. Anschließend wird durch das zweite Endgerät ein Druckauftrag zum Ausdruck des Inhaltes initiiert, der an das mobile Endgerät übermittelt wird. Auf dem mobilen Endgerät wird der Druckauftrag über eine Schnittstelle an einen Drucker zur Ausgabe übermittelt.

Unter Inhalten werden in diesem Zusammenhang Dateien und Daten verstanden, die sich unter Verwendung von Anwendungsprogrammen visualisieren und ausdrucken lassen. Diese Inhalte können sich im Internet, Intranet - d.h. einer Netzwerksumgebung eines Unternehmens - oder auf sonstigen Speichermedien - wie zentrale Server oder einzelne Bürorechner - befinden.

Die Adresses eines Inhaltes ist in der Regel eine sogenannte URL (Unified Ressource Locator z. B. http://www.thinprint.com/inhalt.doc, auch Link genannt), eine Pfadangabe (C:\Dokumente\inhalt.doc) oder eine eindeutige Kennzeichnung (Informationen zum Kunden mit der Kundennummer 1234). All diese Adressierungsformen können dem Benutzer des Endgerätes auch in aufbereiteter Form angeboten werden.

Bei dem mobilen Endgerät handelt es sich vorzugsweise um ein mobiles Endgerät wie Mobiltelefone, Handheld Computer, Laptop und Pocket PCs o. dgl..

Das zweite Endgerät ist in der Regel ein leistungsfähiger stationärer Computer o.dgl.. Es ist jedoch auch denkbar, daß mobile Endgeräte verwendet werden, sofern diese in entsprechender Weise ausgestattet sind.

Bei der Schnittstelle kann es sich um übliche Kabelschnittstellen, Infrarot- bzw. Bluetooth-Schnittstellen o.dgl. handeln.

An das zweite Endgerät wird die Adresse des anzuzeigenden Inhaltes vorzugsweise mittels einer Wählverbindung bzw. das Internet übermittelt, wobei das zweite Endgerät ein Rechner, der beim Nutzer zuhause oder im Büro steht, ein Unternehmensserver oder ein Server eines Internet Service Providers, der diesen Service anbieten möchte, sein kann.

Sollte das mobile Endgerät nicht in der Lage sein, den Druckauftrag am Bildschirm darzustellen, so sieht das Verfahren vor, daß vom zweiten Endgerät parallel eine Bitmap-Datei erzeugt wird, die zusätzlich oder statt des Druckauftrages an das erste Endgerät übertragen wird, da Bitmap-Dateien in der Regel auf jedem Endgerät mit grafischen Darstellungsmöglichkeiten ausgegeben werden können.

Um die zu vom zweiten zum mobilen Endgerät zu übertragende Datenmenge so gering wie möglich zu halten, überträgt das mobile Endgerät seine Anzeigeinformation, z.B. Größe des Displays, notwendige Skalierung, Farb- oder Schwarz/Weiß-Darstellung, zum zweiten Endgerät. Dieses erzeugt aus dem Dokument dann eine Bitmap-Datei, die den spezifischen Anforderungen genügt, so daß nur die tatsächlich notwendige Datenmenge übertragen wird.

Weitere vorteilhafte Ausgestaltungen der Erfindung sind in den Unteransprüchen gekennzeichnet.

## Patentansprüche

1. Verfahren zum mittel- oder unmittelbaren Ausdruck von Inhalten aus dem Internet, Intranet oder einem sonstigen Speichermedium durch ein mobiles Endgerät, wobei
die Adresse des auszudruckenden Inhalts von dem mobilen Endgerät an ein zweites Endgerät übermittelt wird, das diesen Inhalt unter Aufruf der dazugehörigen Anwendung lädt, und anschließend durch das zweite Endgerät ein Druckauftrag zum Ausdruck des Inhaltes initiiert wird,
**dadurch gekennzeichnet, daß**
der Druckauftrag an das mobile Endgerät übermittelt wird, und daß auf dem mobilen Endgerät der Druckauftrag über eine Schnittstelle an einen Drucker zur Ausgabe übermittelt wird.

2. Verfahren nach Anspruch 1, **dadurch gekennzeichnet, daß** nach Übermittlung der Adresse des Inhalts an das zweite Endgerät, und nachdem der Inhalt unter Aufruf der dazugehörigen Anwendung geladen worden ist, die Erstellung einer Bitmap-Datei initiiert, die Bitmap-Datei an das mobile Endgerät übermittelt und auf einer Anzeige des mobilen Endgeräts dargestellt wird.

3. Verfahren nach Anspruch 1, **dadurch gekennzeichnet, daß** nach Übermittlung des Druckauftrags an das mobile Endgerät auf einer Anzeige des mobilen Endgeräts der Druckauftrag als Seitenansicht dargestellt wird.

4. Verfahren nach Anspruch 1, **dadurch gekennzeichnet, daß** nach Übermittlung der Adresse des Inhalts an das zweite Endgerät, und nachdem der Inhalt unter Aufruf der dazugehörigen Anwendung geladen worden ist, die Erstellung einer Bitmap-Datei initiiert, die Bitmap-Datei an das mobile Endgerät übermittelt und auf einer Anzeige des mobilen Endgeräts dargestellt wird, und daß nach Übermittlung des Druckauftrags an das mobile Endgerät auf der Anzeige der Druckauftrag als Seitenansicht dargestellt wird.

5. Verfahren nach Anspruch 2, **dadurch gekennzeichnet, daß** das mobile Endgerät Anzeigeinformationen mit der Adresse zum zweiten Endgerät übermittelt, das aus dem Inhalt eine Bitmap-Datei erzeugt, die den spezifischen Abforderungen der Anzeige des mobilen Endgerätes genügt.

6. Verfahren nach Anspruch 5, **dadurch gekennzeichnet, daß** die Anzeigeinformationen die Größe des Displays, die notwendige Skalierung und/oder die Angabe auf Farb- oder Schwarz/Weiß-Darstellung enthalten.

7. Verfahren nach einem der Ansprüche 1 bis 6, **dadurch gekennzeichnet, daß** das zweite Endgerät ein mobiles Endgerät ist.

8. Verfahren nach einem der Ansprüche 1 bis 7, **dadurch gekennzeichnet, daß** die Schnittstelle eine Kabelschnittstelle, eine Infrarot- bzw. Bluetooth-Schnittstelle ist.

9. Verfahren nach einem der Ansprüche 1 bis 8, **dadurch gekennzeichnet, daß** die Adresse des auszudruckenden Inhalts über eine Wählverbindung bzw. das Internet übermittelt wird.

## Claims

1. Method for direct or indirect printout of contents from the internet, an intranet, or other storage medium, by a mobile end device, where the address of the content to be printed is transmitted from the mobile end device to a second end device, which loads this content by executing the relevant application; and lastly a print job for printout of the content is initiated with the second end device,
thereby **characterized**
that the print job is transmitted to the mobile end device; and that the print job is sent from the mobile end device over an interface to a printer for printout.

2. Method as in Claim 1, thereby **characterized** that after transmission of the address of the content to the second end device, and after loading the content by executing the relevant application, the creation of a bitmap file is initiated, the bitmap file is transmitted to the mobile end device and displayed on the mobile end device's screen.

3. Method as in Claim 1, thereby **characterized** that after transmission of the print job to the mobile end device the print job is displayed on the mobile end device's screen as page preview.

4. Method as in Claim 1, thereby **characterized** that after transmission of the address of the content to the second end device, and after loading the content by executing the relevant application, the creation of a bitmap file is initiated, the bitmap file is transmitted to the mobile end device and displayed on the mobile end device's screen, and that after transmission of the print job to the mobile end device the print job is displayed on the screen as page preview.

5. Method as in Claim 2, thereby **characterized** that the mobile end device sends display information with the address to the second end device, which creates from the document a bitmap file that suffices the mobile end device's specific display requirements.

6. Method as in Claim 5, thereby **characterized** that the display information includes the display size, the necessary scaling, and/or the input about color or black-and-white display.

7. Method as in Claims 1 to 6, thereby **characterized** that the second end device is a mobile end device.

8. Method as in Claims 1 to 7, thereby **characterized** that the interface is a cable interface or an infrared or Bluetooth interface.

9. Method as in Claims 1 to 8, thereby **characterized** that the address of the content to be printed is transmitted over a dial-up connection or the internet.

## Revendications

1. Procédé d'impression indirecte ou directe de contenus d'Internet, d'un Intranet ou d'un autre support de données par un terminal mobile, moyennant quoi l'adresse du contenu à imprimer est transmise par le terminal mobile vers un second terminal mobile, qui charge ce contenu sur l'appel de l'application correspondante, et ensuite qu'une commande d'impression pour imprimer le contenu est initiée par le second terminal,
**caractérisé en ce que**
la commande d'impression est transmise au terminal mobile et la commande d'impression sur le terminal mobile est transmise par l'intermédiaire d'une interface à une imprimante pour la sortie.

2. Procédé selon la revendication 1, **caractérisé en ce qu'**après la transmission de l'adresse du contenu au second terminal, et après que le contenu a été chargé sur appel de l'application correspondante, l'élaboration d'un fichier Bitmap est initiée, le fichier Bitmap est transmis au terminal mobile et est représenté sur un affichage du terminal mobile.

3. Procédé selon la revendication 1, **caractérisé en ce qu'**après la transmission de la commande d'impression au terminal mobile, la commande d'impression est représentée sur un affichage du terminal mobile sous forme d'une pré-visualisation.

4. Procédé selon la revendication 1, **caractérisé en ce qu'**après la transmission de l'adresse du contenu au second terminal, et après que le contenu a été chargé sur appel de l'application correspondante, l'élaboration d'un fichier Bitmap est initiée, le fichier Bitmap est transmis au terminal mobile et est représenté sur un affichage du terminal mobile, et qu'après la transmission de la commande d'impression au terminal mobile, la commande d'impression est représentée sur l'affichage sous forme d'une pré-visualisation.

5. Procédé selon la revendication 1, **caractérisé en ce que** le terminal mobile transmet des informations d'affichage avec l'adresse au second terminal, qui génère à partir du contenu un fichier Bitmap, qui répond aux exigences spécifiques de l'affichage du terminal mobile.

6. Procédé selon la revendication 5, **caractérisé en ce que** les informations d'affichage contiennent la grandeur de l'écran, le cadrage nécessaire et/ou l'indication de visualisation en couleur ou en noir et blanc.

7. Procédé selon l'une des revendications 1 à 6, **caractérisé en ce que** le second terminal est un terminal mobile.

8. Procédé selon l'une des revendications 1 à 7, **caractérisé en ce que** l'interface est une interface à liaison câblée, une interface infrarouge ou blue tooth.

9. Procédé selon l'une des revendications 1 à 8, **caractérisé en ce que** l'adresse du contenu à imprimer est transmise par une connexion commutée ou par Internet.
